# EUROPEAN PATENT APPLICATION

(11) **EP 2 927 469 A1**
(43) Date of publication of application: **07.10.2015**
(21) Application number: 12889261.9
(22) Date of filing: 29.11.2012
(51) Int. Cl.: F02D 45/00, F02D 41/18

(54) **CONTROL DEVICE FOR ENGINE EQUIPPED WITH SUPERCHARGER**

(71) Applicant: TOYOTA JIDOSHA KABUSHIKI KAISHA, Toyota-shi, Aichi-ken, 471-8571 (JP)
(72) Inventor: MORIGUCHI, Ryutaro, Toyota-shi, Aichi-ken, 471-8571 (JP); SAKAYANAGI, Yoshihiro, Toyota-shi, Aichi-ken, 471-8571 (JP); TANAKA, Satoru, Toyota-shi, Aichi-ken, 471-8571 (JP); KUZE, Yasuhiro, Toyota-shi, Aichi-ken, 471-8571 (JP)
(74) Representative: Intès, Didier Gérard André
(86) International application number: PCT/JP2012/080940
(87) International publication number: WO 2014/083654

(57) **Abstract**

An object of the present invention is to calculate an estimated value of an amount of air blowing through an inside of a cylinder by scavenging that occurs in an engine equipped with a supercharger, that is, a scavenging amount. For this purpose, a control device of an engine equipped with a supercharger according to the present invention calculates an estimated value of an intake valve passing air amount from a measured value of an intake air amount, and calculates an estimated value of an in-cylinder air amount from a measured value or an estimated value of intake pipe pressure. From a difference between the estimated value of the intake valve passing air amount and the estimated value of the in-cylinder air amount, the estimated value of the scavenging amount is calculated.

## Description

### Technical Field

The present invention relates to a control device for an engine equipped with a supercharger in which scavenging occurs in a supercharging region.

### Background Art

In an engine equipped with a supercharger, in a supercharging region where supercharging pressure becomes higher than exhaust pressure, scavenging with air blowing through the inside of a cylinder from an intake passage to an exhaust passage occurs. In the engine equipped with a supercharger, supercharging performance can be improved by positive use of the scavenging. This is because if the amount of air blowing through the inside of the cylinder (hereinafter, a scavenging amount) is increased by scavenging, the total amount of the gas which flows into the turbine of a turbocharger increases, and supercharging of air by a compressor is accelerated by increase in the revolution speed of the turbine. Therefore, from the viewpoint of supercharging performance, the scavenging amount is desired to be made as large as possible.

However, increasing the scavenging amount is accompanied by a harmful effect. Since the air flowing into the exhaust passage by scavenging contains a large amount of oxygen, the reaction of unburned fuel and oxygen on the catalyst becomes active as the scavenging amount increases, and heat of the reaction increases the temperature of the catalyst. Subsequently, excessive increase of the catalyst temperature deteriorates the catalyst. Therefore, from the viewpoint of protection of the catalyst, the scavenging amount is desired to be prevented from being excessively large.

In the light of the demand as above, it is understandable that an accurate grasp of the scavenging amount is important in control of the engine equipped with a supercharger. The scavenging amount can be changed by adjusting a valve overlap time period between the exhaust valve and the intake valve. Therefore, if an accurate grasp of the scavenging amount is possible, it becomes possible to control the scavenging amount actively by adjustment of the valve overlap time period so as to enhance the supercharging performance to the maximum within the range where overheating of the catalyst is not caused.

Further, an accurate grasp of the scavenging amount is also useful in air-fuel ratio control. When the scavenging amount becomes large, the cylinder air-fuel ratio becomes richer than the target air-fuel ratio correspondingly to decrease of the air remaining in the cylinder. Therefore, depending on the value of the target air-fuel ratio which is set, there is a fear of occurrence of a misfire by the cylinder air-fuel ratio becoming excessively rich following scavenging. However, if the accurate scavenging amount can be grasped, the rich limit of the target air-fuel ratio is set in accordance with the estimated scavenging amount, and the target air-fuel ratio can be guarded with the rich limit.

As described above, an accurate grasp of the scavenging amount is an important task in the control of the engine equipped with a supercharger. However, the scavenging amount cannot be directly measured by using a sensor such as a flow sensor. Therefore, in order to grasp the scavenging amount, only thing to do is to estimate the scavenging amount indirectly by calculation using engine information relating to scavenging. The scavenging amount is one state amount of the engine, and in estimation of the state amount, a physical model obtained by modeling the engine can be used. For example, Patent Literature 1 described as follows discloses the method for estimating the in-cylinder air amount by using a physical model. However, the method for accurately estimating the scavenging amount is not disclosed in Patent Literature 1 as follows, and is not found in other prior art literatures, either.

### Citation List

### Patent Literature

Patent Literature 1: Japanese Patent Laid-Open No. 2008-291830

### Summary of Invention

The present invention is made in the light of the aforementioned problem, and has an object to provide a control device for an engine equipped with a supercharger that can accurately calculate an estimated value of a scavenging amount.

The control device for an engine equipped with a supercharger according to the present invention includes three calculation units that will be described as follows. The following three calculation units may be respectively configured by separate computers, or one computer may be caused to function as the following three calculation units by software.

A first calculation unit is programmed to calculate an estimated value of an intake valve passing air amount. The intake valve passing air amount is an amount of air that is passed through an intake valve, and the first calculation unit calculates the estimated value of the intake valve passing air amount based on a measured value of an intake air amount. The intake air amount is an amount of air that is taken into an intake passage, and can be measured by using a flow sensor such as an air flow meter.

A second calculation unit is programmed to calculate an estimated value of an in-cylinder air amount. The in-cylinder air amount is an amount of air that is subjected to combustion in a cylinder, and the second calculation unit calculates the estimated value of the in-cylinder air amount based on a measured value or an estimated value of intake pipe pressure. The intake pipe pressure can be measured by an intake pipe pressure sensor. Further, the intake pipe pressure also can be estimated from a measured value of a supercharging pressure by a supercharging pressure sensor.

However, the second calculation means preferably calculates the estimated value of the intake pipe pressure based on the measured value of the intake air amount, and calculates the estimated value of the in-cylinder air amount based on the estimated value of the intake pipe pressure. That is to say, just as the measured value of the intake air amount is set as a basis of the calculation of the estimated value of the intake valve passing air amount in the first calculation unit, the measured value of the intake air amount is set as a basis of the calculation of the estimated value of the in-cylinder air amount in the second calculation unit. This means that both the intake valve passing air amount and the in-cylinder air amount are estimated by using the common sensor output value.

More preferably, the second calculation unit uses the estimated value of the intake valve passing air amount calculated by the first calculation unit as a basis of calculation of the estimated value of the in-cylinder air amount. In this case, the estimated value of the intake valve passing air amount can be converted into the estimated value of the intake pipe pressure by using a first map in which the intake valve passing air amount and the intake pipe pressure are associated with each other by using a plurality of parameters. Further, the estimated value of the intake pipe pressure can be converted into the estimated value of the in-cylinder air amount by using a second map in which the intake pipe pressure and the in-cylinder air amount are associated with each other by using a plurality of parameters.

A third calculation unit is programmed to calculate an estimated value of a scavenging amount. The scavenging amount is an amount of air blowing through an inside of the cylinder, and the third calculation unit calculates the estimated value of the scavenging amount from a difference between the estimated value of the intake valve passing air amount calculated by the first calculation unit, and the estimated value of the in-cylinder air amount calculated by the second calculation unit. Note that a unit of each of the intake valve passing air amount, the in-cylinder air amount and the scavenging amount may be a mass per time, or may be a mass per cycle. Alternatively, each unit may be made dimensionless with a predetermined air amount, for example, a maximum in-cylinder air amount as a reference.

By including the three calculation units as above, according to the control device for an engine equipped with a supercharger according to the present invention, the estimated value of the scavenging amount can be accurately calculated. Especially when both the intake valve passing air amount and the in-cylinder air amount are estimated by using the common sensor output value, the influence which the variations of the output characteristics of the sensors gives on estimation precision of the scavenging amount can be restrained as compared with the case of estimating the intake valve passing air amount and the in-cylinder air amount by using separate sensor output values.

### Brief Description of Drawings

[Figure 1] Figure 1 is a functional block diagram showing a configuration of a control device for an engine equipped with a supercharger according to embodiment 1 of the present invention.
[Figure 2] Figure 2 is an explanatory diagram expressing a calculation method of a scavenging amount by the control device of the configuration shown in Figure 1, in a graph.
[Figure 3] Figure 3 is a diagram for explaining a problem accompanying the control device of the configuration shown in Figure 1.
[Figure 4] Figure 4 is a functional block diagram showing a configuration of a control device for an engine equipped with a supercharger according to embodiment 2 of the present invention.
[Figure 5] Figure 5 is an explanatory view expressing a calculation method of a scavenging amount by the control device of the configuration shown in Figure 4, in a graph.
[Figure 6] Figure 6 is a diagram for explaining an effect of the control device of the configuration shown in Figure 4.

### Description of Embodiments

### Embodiment 1

Hereinafter, embodiment 1 of the present invention will be described with reference to the drawings.

An operation of an engine equipped with a supercharger to which a control device according to the present embodiment is applied is controlled by operations of a plurality of actuators. Various actuators such as a wastegate valve that changes a supercharging characteristic of the supercharger, an electronically controlled throttle, an intake side variable valve timing mechanism that changes valve timing of an intake valve, and an exhaust side variable valve timing mechanism that changes valve timing of an exhaust valve are mounted to the present engine.

The operation of the present engine is controlled by an on-vehicle ECU (Electronic Control Unit). The control device according to the present embodiment is realized as a part of a function included by the ECU. Various kinds of information relating to an operation state and operation conditions of the engine are inputted to the ECU from various sensors including an air flow meter, an intake pipe pressure sensor, an atmospheric pressure sensor, an intercooler temperature sensor, an accelerator position sensor, and a crank angle sensor. When the ECU functions as the control device according to the present embodiment, the ECU cooperatively operates actuators relating to the air amount, that is, the throttle, the intake side variable valve timing mechanism, the exhaust side variable valve timing mechanism, and the wastegate valve in accordance with a control program for air amount control that is stored in a memory.

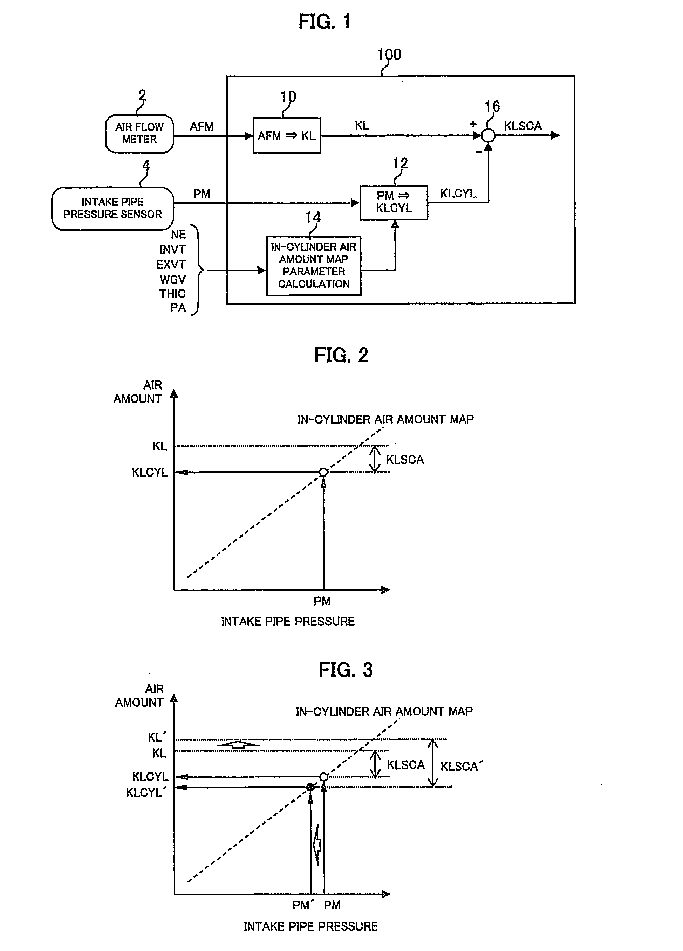

Figure 1 is a functional block diagram showing a configuration of the control device that is realized by the ECU functioning in accordance with an air amount control program. To a control device 100 according to the present embodiment, a measured value AFM of an intake air amount that is obtained by an air flow meter 2, and a measured value PM of an intake pipe pressure that is obtained by an intake pipe pressure sensor 4 are inputted. The air flow meter 2 is a flow sensor that is provided at an inlet of an intake passage, and outputs a signal corresponding to an intake air amount that is an amount of air that is taken into the intake passage. The intake pipe pressure sensor 4 is a pressure sensor that is mounted to an intake pipe (in more detail, an intake manifold), and outputs a signal corresponding to pressure in the intake pipe.

The control device 100 according to the present embodiment is configured by an intake valve passing air amount calculation unit 10, an in-cylinder air amount calculation unit 12, an in-cylinder air amount map parameter calculation unit 14, and a scavenging amount calculation unit 16. The calculation units 10, 12, 14 and 16 are realized through software by the air amount control program being executed in the ECU.

The intake valve passing air amount calculation unit 10 calculates an estimated value KL of an intake valve passing air amount that is an amount of air that passes through the intake valve from the measured value AFM of the intake air amount. The intake air amount and the intake valve passing air amount coincide with each other at a time of a steady state operation of the engine. However, in a transient state such as a time of an acceleration operation and a time of a deceleration operation, a deviation occurs between the intake air amount and the intake valve passing air amount due to a response delay of air. Therefore, the intake valve passing air amount calculation unit 10 calculates the intake valve passing air amount from the intake air amount, by using a physical model that is a result of modeling a response characteristic of the air in the engine equipped with a supercharger.

The in-cylinder air amount calculation unit 12 calculates an estimated value KLCYL of an in-cylinder air amount that is an amount of air subjected to combustion in the cylinder from the measured value PM of the intake pipe pressure. Conditions other than the intake pipe pressure, which influence the in-cylinder air amount, are fixed, a correlation is established between the intake pipe pressure and the in-cylinder air amount. The in-cylinder air amount calculation unit 12 converts the intake pipe pressure into the in-cylinder air amount by using an in-cylinder air amount map in which the correlation is mapped.

The in-cylinder air amount map parameter calculation unit 14 calculates a value of a parameter of the in-cylinder air amount map from the conditions other than the intake pipe pressure, which influence the in-cylinder air amount, and sets the calculated value to the in-cylinder air amount calculation unit 12. The conditions which influence the in-cylinder air amount are more specifically, an engine speed NE, valve timing INVT of the intake valve, valve timing EXVT of the exhaust valve, an opening degree WGV of the wastegate valve, an intercooler temperature THIC, an atmospheric pressure PA and the like. Information relating to these conditions is supplied to the in-cylinder air amount map parameter calculation unit 14 from sensors and actuators relating to the information of them.

The scavenge amount calculation unit 16 calculates a difference between the estimated value KL of the intake valve passing air amount calculated in the intake valve passing air amount calculation unit 10, and the estimated value KLCYL of the in-cylinder air mount calculated in the in-cylinder air amount calculation unit 12. The difference is the scavenging amount, that is, an estimated value KLSCA of the amount of air blowing through the inside of the cylinder. The estimated value KLSCA of the scavenging amount calculated in the scavenging amount calculation unit 16 is used in estimation of a catalyst temperature. The catalyst temperature constitutes a constraint that specifies an upper limit of a turbine flow rate or the supercharging pressure in the supercharging pressure control. Further, the estimated value KLSCA of the scavenging amount is also used in calculation of a guard value that specifies a rich limit of the target air-fuel ratio in air-fuel ratio control.

Figure 2 is an explanatory diagram expressing a calculation method of the scavenging amount by the control device 100 according to the present embodiment, in a graph. A vertical axis of the graph shown in Figure 2 represents the air amount, and a horizontal axis represents the intake pipe pressure. A straight line shown by a broken line in the graph expresses a relation between the in-cylinder air amount and the intake pipe pressure that is specified by the in-cylinder air amount map. A gradient and an intercept of the straight line of the in-cylinder air amount map are determined by the parameter value calculated in the in-cylinder air amount map parameter calculation unit 14.

The control device 100 calculates the estimated value KLCYL of the in-cylinder air amount by substituting the measured value PM of the intake pipe pressure into the in-cylinder air amount map. The graph shows a line of the estimated value KL of the intake valve passing air amount, and when scavenging occurs, the estimated value KL of the intake valve passing air amount is larger than the estimated value KLCYL of the in-cylinder air amount as in the graph. By calculating the difference between the estimated value KLCYL and the estimated value KL, the estimated value KLSCA of the scavenging amount can be obtained. Note that though not illustrated in the graph, the estimated value KL of the intake valve passing air amount becomes smaller than the estimated value KLCYL of the in-cylinder air amount, depending on the operation state of the engine. In that case, the difference between the estimated values expresses an amount of combustion gas remaining in the cylinder, that is, an internal EGR amount.

In the present embodiment, the intake valve passing air amount calculation unit 10 corresponds to "first calculation means" in the present invention. The in-cylinder air amount calculation unit 12 corresponds to "second calculation means" in the present invention. The scavenge amount calculation unit 16 corresponds to "third calculation means" in the present invention.

### Embodiment 2

Next, embodiment 2 of the present invention will be described with reference to the drawings.

As described in embodiment 1, a number of sensors are used in control of the engine. These sensors cannot always obtain fixed output characteristics in all individuals. Due to individual differences at the time of manufacture, or due to a secular change with use, variations in the output characteristics exist among the individuals of the sensors. In the control device 100 according to embodiment 1, the output value from the air flow meter 2 and the output value from the intake pipe pressure sensor 4 are used in estimation of the scavenging amount, and there is a possibility that deviations of the output characteristics occur in these sensors 2 and 4. The deviation of the output characteristic of the air flow meter 2 influences estimation precision of the intake valve passing air amount, and the deviation of the output characteristic of the intake pipe pressure sensor 4 influences measurement precision of the intake pipe pressure. A problem in the case like this will be described with use of Figure 3.

The estimated value KL of the intake valve passing air amount, and the measured value PM of the intake pipe pressure in a graph shown in Figure 3 are assumed to be true values that should be obtained when no deviation exists in the output characteristics of the respective sensors 2 and 4. Meanwhile, it is assumed that in the example of this time, an estimated value KL' of the intake valve passing air amount is obtained from the output value from the air flow meter 2, and a measured value PM' of the intake pipe pressure is obtained from the output value from the intake pipe pressure sensor 4. In this example, the output characteristic of the air flow meter 2 is deviated in a direction to output a value larger an actual value, and the output characteristic of the intake pipe pressure sensor 4 is deviated in a direction to output a value smaller than an actual value. As a result, the estimated value KL' of the intake valve passing air amount is larger than the correct value KL, whereas the estimated value KLCYL' of the in-cylinder air amount calculated from the measured value PM' of the intake pipe pressure is smaller than the correct value KLCYL. Since the scavenging amount is the difference between the intake valve passing air amount and the in-cylinder air amount, in this example, the estimated value KL' of the intake valve passing air amount and an error of the estimated value KLCYL' of the in-cylinder air amount add up, and thereby an estimated value KLSCA' of the scavenging amount which is finally calculated becomes a value including a large error with respect to the correct value KLSAC.

As above, the control device 100 according to embodiment 1 has the problem of being susceptible to the variations of the output characteristics of the air flow meter 2 and the intake pipe pressure sensor 4.

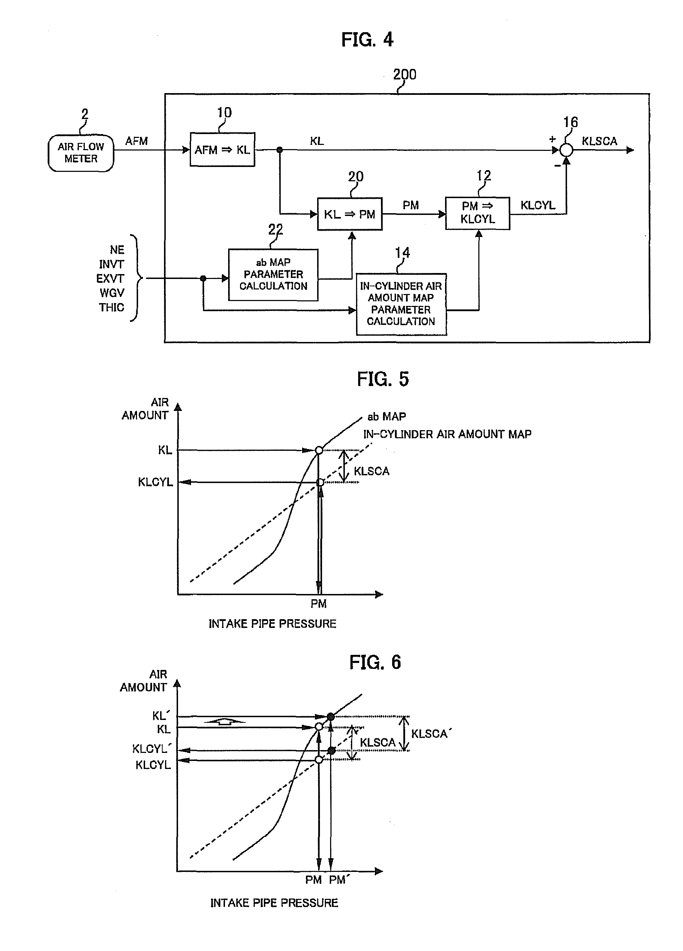

A control device according to embodiment 2 has a configuration in which a countermeasure against the above described problem is taken. Figure 4 is a functional block diagram showing the configuration of a control device 200 according to the present embodiment. In the configuration shown in Figure 4, common elements to the elements which the control device 100 according to embodiment 1 has are assigned with the same reference signs.

A difference of the control device 200 according to the present embodiment from embodiment 1 is that the output value from the intake pipe pressure sensor is not used in estimation of the scavenging amount. The control device 200 according to the present embodiment calculates the estimated value KLCYL of the in-cylinder intake air amount based on the measured value AFM of the intake air amount obtained by the air flow meter 2. In order to realize the function, the control device 200 according to the present embodiment includes an intake pipe pressure calculation unit 20 and an ab map parameter calculation unit 22, in addition to the calculation units 10, 12, 14 and 16 common to embodiment 1.

The intake pipe pressure calculation unit 20 calculates the estimated value PM of the intake pipe pressure from the estimated value KL of the intake valve passing air amount. The estimated value KL of the intake valve passing air amount is calculated from the measured value AFM of the intake air amount by the intake valve passing air amount calculation unit 10. When the conditions other than the intake pipe pressure, which influence the intake valve passing air amount, are fixed, a correlation is established between the intake valve passing air amount and the intake pipe pressure. The intake pipe pressure calculation unit 20 converts the intake valve passing air amount into the intake pipe pressure by using a so-called ab map in which the correlation is mapped. The estimated value PM of the intake pipe pressure calculated in the intake pipe pressure calculation unit 20 is inputted to the in-cylinder air amount calculation unit 12. The in-cylinder air amount calculation unit 12 calculates the estimated value KLCYL of the in-cylinder air amount from the estimated value PM of the intake pipe pressure.

The ab map parameter calculation unit 22 calculates the value of the parameter of the ab map from the conditions other than the intake pipe pressure, which influence the intake valve passing air amount, and sets the calculated value to the intake pipe pressure calculation unit 20. The conditions which influence the intake valve passing air amount are more specifically the engine speed NE, the valve timing INVT of the intake valve, the valve timing EXVT of the exhaust valve, the opening degree WGV of the wastegate valve, the intercooler temperature THIC, and the atmospheric pressure PA. Information relating to these conditions is supplied to the ab map parameter calculation unit 22 from the sensors and actuators relating to the information of them.

Figure 5 is an explanatory diagram expressing a calculation method of the scavenging amount by the control device 200 according to the present embodiment, in a graph. A vertical axis of the graph shown in Figure 5 represents the air amount, and a horizontal axis represents the intake pipe pressure. A curve shown by a solid line in the graph expresses a relation between the intake valve passing air amount and the intake pipe pressure specified by the ab map. A shape of the curve of the ab map is determined by the parameter value calculated in the ab map parameter calculation unit 22. A straight line shown by a broken line in the graph expresses the relation between the in-cylinder air amount and the intake pipe pressure specified by the in-cylinder air amount map.

The control device 200 according to the present embodiment first calculates the estimated value KL of the intake valve passing air amount from the measured value AFM of the intake air amount, substitutes the estimated value KL of the intake valve passing air amount into the ab map (the first map), and thereby calculates the estimated value PM of the intake pipe pressure. Next, the control device 200 substitutes the estimated value PM of the intake pipe pressure into an in-cylinder air amount map (a second map), and thereby calculates the estimated value KLCYL of the in-cylinder air amount. Subsequently, the control device 200 calculates the difference between the estimated value KL of the intake valve passing air amount and the estimated value KLCYL of the in-cylinder air amount, and thereby calculates the estimated value KLSCA of the scavenging amount. As above, according to the control device 200 according to the present embodiment, the estimated value KLSCA of the scavenging amount is calculated by using only the measured value AFM of the intake air amount which is obtained by the air flow meter 2.

Figure 6 is a diagram for explaining an effect of the control device 200 according to the present embodiment. The estimated value KL of the intake valve passing air amount and the measured value PM of the intake pipe pressure in the graph shown in Figure 6 are assumed to be true values that should be obtained when there is no deviation in the output characteristic of the air flow meter 2. Meanwhile, it is assumed that in the example of this time, the estimated value KL' of the intake valve passing air amount is obtained from the output value of the air flow meter 2. From the estimated value KL' of the intake valve passing air amount, the estimated value PM' of the intake pipe pressure is obtained, and from the estimated value PM' of the intake pipe pressure, the estimated value KLCYL' of the in-cylinder air amount is obtained. In this example, the output characteristic of the air flow meter 2 is deviated in the direction to output a value larger than the actual value. As a result, the estimated value KL' of the intake valve passing air amount becomes larger than the correct value KL. However, the estimated value PM' of the intake pipe pressure which is converted from the estimated value KL' of the intake valve passing air amount becomes larger than the correct value PM, and the estimated value KLCYL' of the in-cylinder air amount which is converted from the estimated value PM' of the intake pipe pressure also becomes larger than the correct value KLCYL, likewise. Thereby, an error of the estimated value KL' of the intake valve passing air amount and an error of the estimated value KLCYL' of the in-cylinder air amount cancels out each other, and an error of the estimated value KLSCA' of the scavenging amount which is finally calculated relative to the correct value KLSAC is restrained to be small.

As is understandable from the above example, the configuration which is included by the control device 200 according to the present embodiment has higher robustness to variations of the output characteristics of the sensors as compared with the configuration included by the control device 100 according to embodiment 1. Therefore, according to the control device 200 according to the present embodiment, the estimated value of the scavenging amount can be accurately calculated without being influenced by the variations of the output characteristics of the sensors.

Note that in the present embodiment, the intake valve passing air amount calculation unit 10 corresponds to "the first calculation means" in the present invention. A combination of the intake pipe pressure calculation unit 20 and the in-cylinder air amount calculation unit 12 corresponds to "the second calculation means" in the present invention. The scavenging amount calculation unit 16 corresponds to "the third calculation means" in the present invention.

### Others

The present invention is not limited to the aforementioned embodiments, and can be carried out by being variously modified within the range without departing from the gist of the present invention. For example, in embodiment 1, the intake pipe pressure is measured by the intake pipe pressure sensor, but when the supercharging pressure sensor is included upstream of the throttle, the intake pipe pressure also can be estimated by using a physical model of the throttle based on the output value from the supercharging pressure sensor.

The control device according to the present invention also can be applied to the engine equipped with a supercharger which does not include an actuator that changes a supercharging characteristic of the supercharger, such as a wastegate valve and a variable nozzle. The supercharger may be a turbocharger or may be a mechanical supercharger. Further, in the engine equipped with a supercharger to which the control device according to the present invention is applied, the intake side variable valve timing mechanism and the exhaust side variable valve timing mechanism are not indispensable. Further, the type of the engine equipped with a supercharger may be a diesel engine or may be a gasoline engine.

### Reference Signs List

- 2: Air flow meter
- 4: Intake pipe pressure sensor
- 10: Intake valve passing air amount calculation unit
- 12: In-cylinder air amount calculation unit
- 14: In-cylinder air amount map parameter calculation unit
- 16: Scavenging amount calculation unit
- 20: Intake pipe pressure calculation unit
- 22: ab map parameter calculation unit
- 100: Control device according to embodiment 1
- 200: Control device according to embodiment 2

## Claims

1. A control device for an engine equipped with a supercharger, comprising:
first calculation means configured to calculate an estimated value of an intake valve passing air amount that is an amount of air passed through an intake valve, based on a measured value of an intake air amount that is an amount of air taken into an intake passage;
second calculation means configured to calculate an estimated value of an in-cylinder air amount that is an amount of air that is subjected to combustion in an cylinder, based on a measured value or an estimated value of intake pipe pressure; and
third calculation means configured to calculate an estimated value of a scavenging amount that is an amount of air blowing through an inside of the cylinder, based on a difference between the estimated value of the intake valve passing air amount and the estimated value of the in-cylinder air amount.

2. The control device for an engine equipped with a supercharger according to claim 1,
wherein the second calculation means is configured to calculate the estimated value of the intake pipe pressure based on the measured value of the intake air amount, and calculates the estimated value of the in-cylinder air amount based on the estimated value of the intake pipe pressure.

3. The control device for an engine equipped with a supercharger according to claim 2,
wherein the second calculation means is configured to calculate the estimated value of the intake pipe pressure, based on the estimated value of the intake valve passing air amount calculated from the measured value of the intake air amount by the first calculation means.

4. The control device for an engine equipped with a supercharger according to claim 3,
wherein the second calculation means is configured to convert the estimated value of the intake valve passing air amount into the estimated value of the intake pipe pressure by using a first map in which the intake valve passing air amount and the intake pipe pressure are associated with each other by using a plurality of parameters, and converts the estimated value of the intake pipe pressure into the estimated value of the in-cylinder air amount by using a second map in which the intake pipe pressure and the in-cylinder air amount are associated with each other by using a plurality of parameters.
